# EUROPEAN PATENT SPECIFICATION

(11) **EP 2 421 005 B1**
(45) Date of publication and mention of the grant of the patent: **13.08.2014**
(21) Application number: 10764424.7
(22) Date of filing: 12.04.2010
(51) Int. Cl.: G21C 7/06, G21C 7/08, G21C 7/22, G21C 3/326, G21C 19/28

(54) **Nuclear reactor**
Réacteur nucléaire
Kernreaktor

(30) Priority: 14.04.2009 JP 2009098472
(43) Date of publication of application: 22.02.2012
(73) Proprietor: Mitsubishi Heavy Industries, Ltd., Tokyo 108-8215 (JP)
(72) Inventor: HATTORI, Kazuhiro, Tokyo 108-8215 (JP); ONOUE, Masaaki, Tokyo 108-8215 (JP); YOSHIZU, Tatsuhiro, Tokyo 108-8215 (JP)
(74) Representative: Intès, Didier Gérard André
(86) International application number: PCT/JP2010/056528
(87) International publication number: WO 2010/119840

(56) References cited:
- JP-A- 1 094 293
- JP-A- 2 154 195
- JP-A- 4 270 991
- JP-A- 61 129 594
- JP-A- 63 172 990
- JP-A- 2006 113 069
- JP-A- 2007 003 371
- US-A- 5 544 211
- US-A- 5 854 817
- US-A1- 2006 109 946

## Description

### Field

The present invention relates to a nuclear reactor that can reduce environmental loads.

### Background

A nuclear reactor (hereinafter referred to as reactor) is an apparatus that obtains thermal energy by nuclear reactions of nuclear fuel. There is a type of reactor in which boron, as a neutron absorber, is added to a coolant for adjusting the reactivity of the reactor (for example, Patent Literature 1).

### Citation List

### Patent Literature

Patent Literature 1: Japanese Patent Application Laid-open No. H7-244185, [0002], [0005] US 2006/0109946, US 5 544 211 and US 5 854 817 disclose nuclear reactor or fuel assembly for nuclear reactor.

### Summary

### Technical Problem

When a neutron absorber is added to a coolant to adjust the reactivity of a reactor, it is necessary to add the neutron absorber to the coolant or dilute the coolant to which the neutron absorber is added. In the latter case, because an excessive coolant including the neutron absorber is generated, it is necessary to remove the neutron absorber from the excessive coolant before processing. Therefore, when the neutron absorber is added to the coolant to adjust the reactivity of the reactor, waste of the neutron absorber (boric acid waste in a case of boric acid) is generated. Because this waste is radioactive waste, environmental loads are increased to process this waste. The present invention has been achieved in view of the above problems, and an object of the present invention is to provide a reactor capable of reducing environmental loads.

### Solution to Problem

According to an aspect of the present invention, there is provided with a nuclear reactor as defined by claim 1, this nuclear reactor including a fuel rod into which nuclear fuel is enclosed and a control rod that controls nuclear reactions of the nuclear fuel, wherein a concentration of a neutron absorber in a primary coolant at a full power operation of the nuclear reactor, when an operation of the nuclear reactor is started, is set equal to or lower than a value that is obtained by adding a predetermined value to a value obtained by subtracting a concentration of the neutron absorber that is required for maintaining a cold shutdown state of the nuclear reactor when an operation of the nuclear reactor is started from a concentration of the neutron absorber that is required for maintaining cold shutdown state of the nuclear reactor when an operation of the nuclear reactor is completed.
With this configuration, because it is possible to reduce the amount of the neutron absorber to be added to the primary coolant during an operation of the reactor, environmental loads can be reduced.

In the nuclear reactor, burnable poison is added to fuel that constitutes the fuel rod, and a concentration of the burnable poison at a central portion of the fuel rod is higher than a concentration of the burnable poison at least at one of ends of the fuel rod.

In the nuclear reactor, the control rod has a reactivity control capability such that the nuclear reactor in operation can be achieved cold shutdown without putting a neutron absorber into the primary coolant.

Advantageously, in the nuclear reactor, the primary coolant is water, and an atomic number ratio of hydrogen to heavy metal of the nuclear reactor is 4.5 or more, and is equal to or less than a value that maximizes core reactivity of a nuclear reactor when boron is not added to the primary coolant.

### Advantageous Effects of Invention

The present invention can provide a reactor that can reduce environmental loads.

### Brief Description of Drawings

FIG. 1 is a schematic diagram of a nuclear power plant.
FIG. 2 depicts a breakdown of a reactivity control of a reactor.
FIG. 3-1 is a schematic diagram of a concentration of burnable poison in fuel rods.
FIG. 3-2 is a schematic diagram of a concentration of burnable poison in the fuel rods.
FIG. 4 is a schematic diagram of a variation in a boron concentration in a primary coolant at the time of a rated output operation from a BOC (Beginning Of Cycle: at the time of start of an operation of a reactor) to an EOC (End Of Cycle: at the time of completion of an operation) of a reactor that performs a chemical shim control.
FIG. 5 depicts an example of enhancing a reactivity control capability of a control rod.
FIG. 6 depicts an example of enhancing the reactivity control capability of the control rod.
FIG. 7 depicts an example of enhancing the reactivity control capability of the control rod.
FIG. 8 depicts a relationship between an effective multiplication factor and a primary coolant density.
FIG. 9 depicts a relationship between an effective multiplication factor and an atomic number ratio H/HM of hydrogen to heavy metal.
FIG. 10 depicts a relationship between an effective multiplication factor and the atomic number ratio H/HM of hydrogen to heavy metal.
FIG. 11 depicts an arrangement pitch of fuel rods. Description of Embodiments

The present invention is explained below in detail with reference to the accompanying drawings. The present invention is not limited to the following mode for carrying out the invention (hereinafter, "embodiment"). In addition, constituent elements in the following embodiment include those that can be easily assumed by persons skilled in the art, that are substantially equivalent, and so-called equivalents.

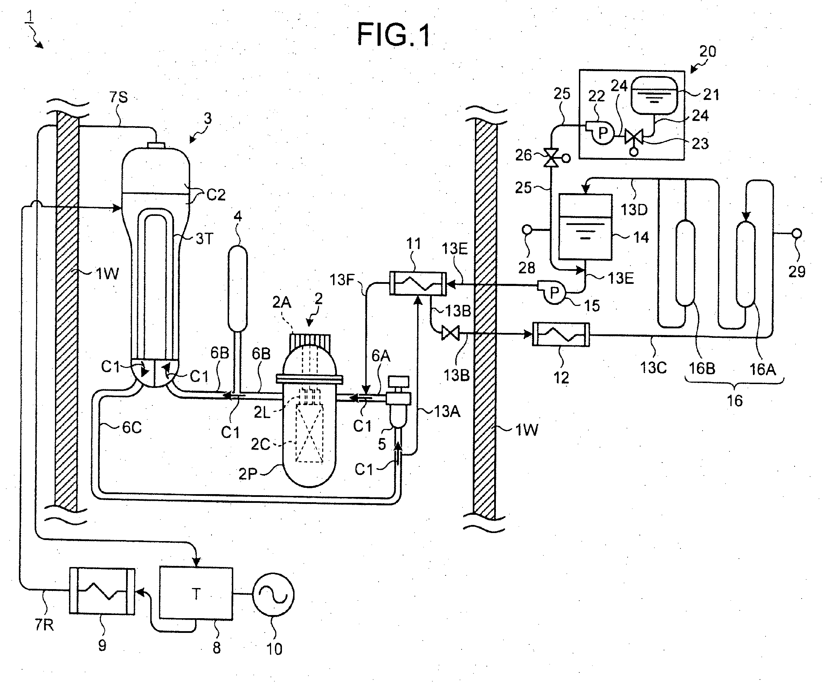

FIG. 1 is a schematic diagram of a nuclear plant. A nuclear plant 1 is a nuclear power plant. A reactor 2 that constitutes the nuclear power plant 1 is a PWR (Pressurized Water Reactor). The nuclear power plant 1 has a containment vessel 1W, and the reactor 2, a steam generator 3, a pressurizer 4, a primary coolant pump 5, and a regenerative heat exchanger 11 are arranged in the containment vessel 1W. A turbine 8, a steam condenser 9, and a power generator 10 are arranged outside the containment vessel 1W.

The reactor 2 includes a pressure vessel 2P, and a fuel portion 2C is arranged in the pressure vessel 2P. Further, the pressure vessel 2P is filled therein with a primary coolant (corresponding to cooling water, and in the present embodiment, light water is used) C1. The primary coolant pump 5 and the reactor 2 are connected to each other through a primary-coolant first supplying path 6A. The reactor 2 and the steam generator 3 are connected to each other through a primary-coolant second supplying path 6B. Further, the steam generator 3 and the primary coolant pump 5 are connected to each other through a primary-coolant recovery path 6C.

With this configuration, the primary coolant C1 discharged from the primary coolant pump 5 is supplied into the pressure vessel 2P of the reactor 2 through the primary-coolant first supplying path 6A. The primary coolant (in the present embodiment, light water) C1 is heated by thermal energy generated by nuclear fission reactions of fuel (nuclear fuel) that constitutes the fuel portion 2C arranged in the pressure vessel 2P. That is, uranium or plutonium as nuclear fuel that constitutes fuel assembly undergoes nuclear fission, thereby discharging neutrons, a moderator and the light water that functions as primary-cooling water reduce kinetic energy of discharged fast neutrons, thereby changing the fast neutrons into thermal neutrons so that new nuclear fission is easily generated, heat generated by nuclear fission of nuclear fuel is conducted away and its temperature is lowered. There are a plurality of fuel rods each having a cladding tube. A plurality of fuel pellets are enclosed in the cladding tube. The plurality of fuel rods are bundled to constitute the fuel assembly, and two or more fuel assembly are arranged to constitute the fuel portion 2C. The fuel portion 2C and the primary coolant existing around the fuel portion 2C constitute a reactor core.

The primary coolant C1 heated by thermal energy generated by nuclear fission reactions of fuel is supplied to the steam generator 3 through the primary-coolant second supplying path 6B. The primary coolant C1 passes through a heat exchanger tube 3T of the steam generator 3, flows out from the steam generator 3, returns to the primary coolant pump 5 through the primary-coolant recovery path 6C, and is discharged from the primary-coolant first supplying path 6A into the pressure vessel 2P of the reactor 2.

A plurality of control rods 2L are arranged in the reactor 2. The control rods 2L are driven by a control-rod driving apparatus 2A. The control-rod driving apparatus 2A controls the nuclear fission of fuel that constitutes the fuel portion 2C by inserting or pulling out the control rods 2L into or from the fuel portion 2C. The number of neutrons produced in the reactor core is adjusted by inserting the control rods 2L into the fuel portion 2C.

The steam generator 3 includes a plurality of heat exchanger tubes 3T. A secondary coolant C2 existing outside of the heat exchanger tubes 3T is heated and boiled by the primary coolant C1 flowing through the heat exchanger tubes 3T, and high temperature and high pressure steam of the secondary coolant C2 is produced. The steam generator 3 and the turbine 8 are connected to each other through a steam supplying path 7S. The steam condenser 9 and the steam generator 3 are connected to each other through a secondary-coolant recovery path 7R. With this configuration, the high temperature and high pressure steam of the secondary coolant C2 produced by the steam generator 3 is supplied to the turbine 8 through the steam supplying path 7S and drives the turbine 8. Electric power is generated by the power generator 10 connected to a drive shaft of the turbine 8. The secondary coolant C2, after driving the turbine 8, becomes liquid in the steam condenser 9, and is again sent to the steam generator 3 through the secondary-coolant recovery path 7R.

As described above, in the present embodiment, because the reactor 2 is a PWR, the pressurizer 4 that pressurizes the primary coolant is connected to the primary-coolant second supplying path 6B. The pressurizer 4 applies pressure to the primary coolant C1 in the primary-coolant second supplying path 6B. According to this structure, even if the primary coolant C1 is heated by the thermal energy generated by the nuclear fission reactions of the nuclear fuel, the primary coolant C1 is not boiled, and the primary coolant C1 circulates, in its liquid phase state, through the reactor 2 and its cooling system. The cooling system of the reactor 2 through which the primary coolant C1 flows is composed of the primary coolant pump 5, the primary-coolant first supplying path 6A, the primary-coolant second supplying path 6B, the steam generator 3, and the primary-coolant recovery path 6C.

A demineralizer 16 is provided to remove impurities included in the primary coolant C1. The demineralizer 16 includes a first demineralizer 16A and a second demineralizer 16B, and the demineralizer 16 is provided outside of the containment vessel 1W. The first demineralizer 16A is a coolant hotbed demineralizer, and the second demineralizer 16B is a coolant cation demineralizer. The primary coolant C1 that has been extracted from an inlet side (an upstream side) of the primary coolant pump 5 is supplied to the demineralizer 16 from the cooling system of the reactor 2, the primary coolant C1 is subjected to demineralizing processing, and the demineralized primary coolant C1 is returned to an outlet side (a downstream side) of the primary coolant pump 5.

A demineralizing processing system of the primary coolant C1 includes a primary-coolant extracting path 13A, the regenerative heat exchanger 11, a primary coolant path 13B, a nonregenerative heat exchanger 12, a primary coolant path 13C, the demineralizer 16, a primary coolant path 13D, a volume control tank 14, and primary-coolant returning paths 13E and 13F. The primary-coolant extracting path 13A connects the primary-coolant recovery path 6C, which constitutes the cooling system of the reactor 2, with the regenerative heat exchanger 11. The regenerative heat exchanger 11 and the nonregenerative heat exchanger 12 are connected to each other through the primary coolant path 13B. The nonregenerative heat exchanger 12 and the demineralizer 16 are connected to each other through the primary coolant path 13C.

The demineralizer 16 and the volume control tank 14 are connected to each other through the primary coolant path 13D. The volume control tank 14 and the regenerative heat exchanger 11 are connected to each other through the primary-coolant returning path 13E. The regenerative heat exchanger 11 and the primary-coolant first supplying path 6A are connected to each other through the primary-coolant returning path 13F. The primary-coolant returning path 13E is provided with a charging pump 15.

The primary coolant C1 is extracted from the primary-coolant extracting path 13A, that is, from the inlet side (the upstream side) of the primary coolant pump 5. The primary coolant C1 that has been extracted from the cooling system of the reactor 2 is guided to the regenerative heat exchanger 11, and thereafter the primary coolant C1 is guided to the demineralizer 16 through the primary coolant path 13B, the nonregenerative heat exchanger 12, and the primary coolant path 13C, and the primary coolant C1 is subjected to the demineralizing processing. The demineralized primary coolant C1 is temporarily stored in the volume control tank 14 through the primary coolant path 13D, and thereafter the primary coolant C1 is sent to the regenerative heat exchanger 11 by the charging pump 15 provided in the primary-coolant returning path 13E. The primary coolant C1 that passed through the regenerative heat exchanger 11 is returned to the primary-coolant first supplying path 6A, that is, the outlet side (the downstream side) of the primary coolant pump 5 through the primary-coolant returning path 13F.

In a PWR, because the primary coolant is not boiled in the pressure vessel 2P that constitutes the reactor 2, it is possible to add an additive into the primary coolant. Therefore, for the purpose of controlling the reactivity of the reactor 2, a neutron absorber is normally added into the primary coolant. As the neutron absorber, boric acid that favorably absorbs neutrons is added into the primary coolant and dissolved therein. Because the boric acid includes boron atom that is a neutron absorber, the boric acid favorably absorbs neutrons. The reactivity is controlled by adjusting a boron concentration in the primary coolant. This is called "chemical shim control" (adjustment of boron concentration).

At an initial stage of a reactor operation, for example, the boric acid is added such that an amount of boron that is the neutron absorber becomes about 2000 ppm (mass ppm), the boron is continuously diluted as the operation proceeds, and a long-term variation in the reactivity of the reactor core is compensated. The chemical shim control is performed by a chemical and volume control equipment of a primary cooling system that constitutes the reactor 2. The chemical shim control is used when it is desired to vary the reactivity as fuel is burned or when it is desired to gradually vary output of the reactor 2. Because boron is uniformly distributed over the entire reactor, there is an advantage such that distribution of output in the reactor is less prone to be varied locally.

In the present embodiment, a boron injecting apparatus 20 is provided to inject boron into the primary coolant C1. In the present embodiment, the boron is injected, in a form of boric acid, into the primary coolant C1 from between the volume control tank 14 that constitutes the demineralizing processing system of the primary coolant C1 and the charging pump 15. The boron injecting apparatus 20 includes a boric acid tank 21, a boric-acid injecting pump 22 that is a boron injecting unit, a boric-acid supplying path 24 that connects the boric acid tank 21 with the boric-acid injecting pump 22, and a flow-volume adjusting valve 23 provided in the boric-acid supplying path 24.

The boric acid is stored in the boric acid tank 21 in a form of boric acid water solution whose concentration is adjusted to a predetermined value. The flow-volume adjusting valve 23 adjusts an injecting speed of boric acid. The injecting speed of boric acid can be adjusted by controlling the boric-acid injecting pump 22. In the present embodiment, the injecting speed of boric acid is adjusted using at least one of the boric-acid injecting pump 22 and the flow-volume adjusting valve 23.

The boric-acid injecting pump 22 and the primary-coolant returning path 13E are connected to each other through a boric-acid injecting path 25. The boric-acid injecting path 25 is provided with an open/close valve 26. The open/close valve 26 is opened when it is necessary to inject boric acid, and the open/close valve 26 is closed when it is unnecessary to inject the boric acid. The boric-acid injecting path 25 is provided with a flowmeter 28 that measures a flow volume of boric acid injected into the primary coolant C1. The flowmeter 28 measures the flow volume of boric acid injected into the primary coolant C1.

Further, the primary coolant path 13C that constitutes a demineralizing processing system of the primary coolant C1 is provided with a primary-coolant-sample collecting point 29 for measuring the concentration of boric acid in the primary coolant C1. With this arrangement, the concentration of boric acid included in the primary coolant C1 is measured. Operations of the boric-acid injecting pump 22, the flow-volume adjusting valve 23, and the open/close valve 26 are controlled by a manual operation of an operator, for example. The flow volume of boric acid measured by the flowmeter 28 and the concentration of boric acid measured at the primary-coolant-sample collecting point 29 are used for operations of the nuclear power plant.

When boric acid is injected into the primary coolant C1, an opening rate of the flow-volume adjusting valve 23 and driving conditions of the boric-acid injecting pump 22 are set so that the boric acid can be injected at a set injecting speed. The open/close valve 26 is opened, the opening rate of the flow-volume adjusting valve 23 is adjusted to a set value, and the boric-acid injecting pump 22 is driven under the set driving conditions by a manual operation. With this configuration, the boric acid in the boric acid tank 21 is injected into the primary coolant C1 in the primary-coolant returning path 13E through the boric-acid supplying path 24 and the boric-acid injecting path 25.

In this manner, the boric acid injected into the primary coolant C1 is sent to the regenerative heat exchanger 11 together with the primary coolant C1 by the charging pump 15. The boric acid and the primary coolant C1 flow toward the primary-coolant first supplying path 6A, that is, toward the outlet side (the downstream side) of the primary coolant pump 5 through the primary-coolant returning path 13F, and thereafter the boric acid and the primary coolant C1 are supplied to the entire region in the reactor 2.

According to the chemical shim control, the boric acid as a neutron absorber is injected to the primary coolant. Therefore, waste of boric acid (boric acid waste) is generated. The boric acid waste discharged from the reactor 2 is radioactive waste, and predetermined processing thereof is required. However, when the discharge amount of the boric acid waste can be reduced, environmental loads can be reduced. Therefore, when the reactivity of the reactor 2 is controlled, it is preferable to reduce the chemical shim concentration in the primary coolant. In the present embodiment, the reactivity control ratio of the reactor 2 assigned to the chemical shim control is reduced both while the reactor 2 is being operated and when the reactor 2 is to be shut down.

### [Reduction of chemical shim control during operation of reactor]

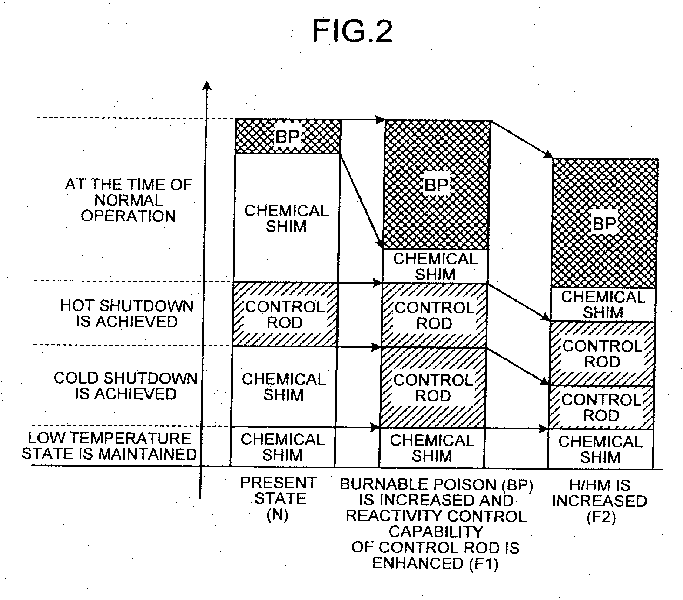

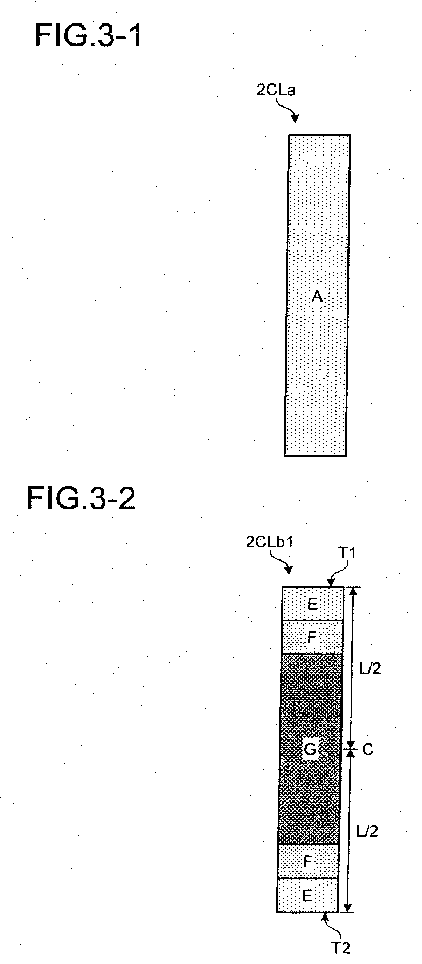

FIG. 2 depicts a breakdown of the reactivity control of the reactor. FIGS. 3-1 and 3-2 are schematic diagrams of a concentration of burnable poison in fuel rods. The reference sign L in FIG. 3-2 represents a size (a length) of a fuel rod 2CLb1 in its longitudinal direction, and the reference sign C represents a central portion of the fuel rod 2CLb1. In the present embodiment, burnable poison (BP) is used in large quantity. For example, gadolinium (Gd) is used as the burnable poison, and the gadolinium is added to the fuel in large quantity (for example, 0% by mass or more and 20% by mass or less). With this configuration, the concentration of boron in the primary coolant can be reduced by an amount corresponding to the reactivity of the burnable poison. Therefore, as compared with a present state (N), it is possible to reduce the chemical shim control concentration in the primary coolant when the reactivity of the reactor is controlled at the time of a rated output operation (Fl in FIG. 2) as shown in FIG. 2. As a result, when the reactivity of the reactor is controlled, it is possible to reduce the chemical shim control concentration in the primary coolant.

The "burnable poison" is a poisonous substance which causes neutron absorbing reaction as a poison effect, and whose concentration is largely varied by the neutron absorbing reactions. The term "burnable" means properties that disappear as the nuclear fuel is burned. The term "poison" means a neutron absorbing capability, and the term "poisonous substance" means a substance having a high neutron absorbing capability, and these terms are different from generally mentioned poison or poisonous substance, respectively. Because it is possible to increase an increase width of an atomic number ratio H/HM of hydrogen to heavy metal by reducing the chemical shim control concentration in the primary coolant, there is an advantage in optimizing the design of fuel assembly. The atomic number ratio H/HM of hydrogen to heavy metal is defined by a ratio of the quantity of hydrogen atoms and the quantity of atoms of heavy metal (nuclear fuel such as uranium) in the fuel assembly, and when the atomic number ratio H/HM of hydrogen to heavy metal is increased, the ratio of the primary coolant with respect to fuel in the pressure vessel of the reactor is increased.

In a case of a typical reactor core of a four-loop PWR, the atomic number ratio H/HM of hydrogen to heavy metal is about 4.1, on the condition that the diameter of a fuel rod is 9.5 millimeters, the pitch width of the fuel rod is 12.6 millimeters, the diameter of a fuel pellet is 8.2 millimeters, the density of heavy metal (UO₂) in the pallet is 10.97 g/cm³, the theoretical density of the pellet is 97 %TD, the UO₂ mole mass is 270.03 g/mol, the moderator (water) density at the time of a rated output operation is 0.71 g/cm³, the moderator (water) mole mass is 18.015 g/mol, and the outer diameters of the control rod and a guiding thimble for in-core instrumentation are 12.2 millimeters.

when the burnable poison is used in large quantity, even if the concentration of the burnable poison with respect to its longitudinal direction has the same value (A% by mass) like a fuel rod 2CLa shown in FIG. 3-1, it is possible to reduce the chemical shim control concentration in the primary coolant. However, when the burnable poison is used in large quantity, usually, a distortion of output distribution in the reactor core is prone to be increased (output of a central portion of the fuel rod in its longitudinal direction is increased). Therefore, a specification of fuel and design of the reactor core to moderate this are employed. For example, like the fuel rod 2CLb1 shown in FIG. 3-2, burnable poison is added to fuel, such that the concentration of the burnable poison at a central portion of the fuel rod 2CLb1 is set higher than concentrations of burnable poisons at both ends T1 and T2 of the fuel rod 2CLb1. In the fuel rod 2CLb1, the concentrations of the burnable poison are set, from both the ends T1 and T2 toward the central portion, to E (% by mass)<F (% by mass)<G (% by mass).

As described above, by setting the concentration of the burnable poison at the central portion of the fuel rod 2CLb1 higher than the concentrations of burnable poisons at both ends T1 and T2 of the fuel rod 2CLb1, output at the central portion of the fuel rod 2CLb1 in its longitudinal direction is suppressed. As a result, it is possible to suppress the distortion of the output distribution in the reactor core. The concentration distribution of the burnable poison in the fuel rod is changed in accordance with specifications of the reactor and the reactor core. According to the invention, the concentration of the burnable poison at the central portion of the fuel rod is set higher than the concentration of burnable poison at one end of the fuel rod. In this manner, in the present embodiment, the distortion of output distribution in the reactor core is suppressed by setting the concentration of the burnable poison at the central portion of the fuel rod higher than the concentration of the burnable poison at least one of ends of the fuel rod.

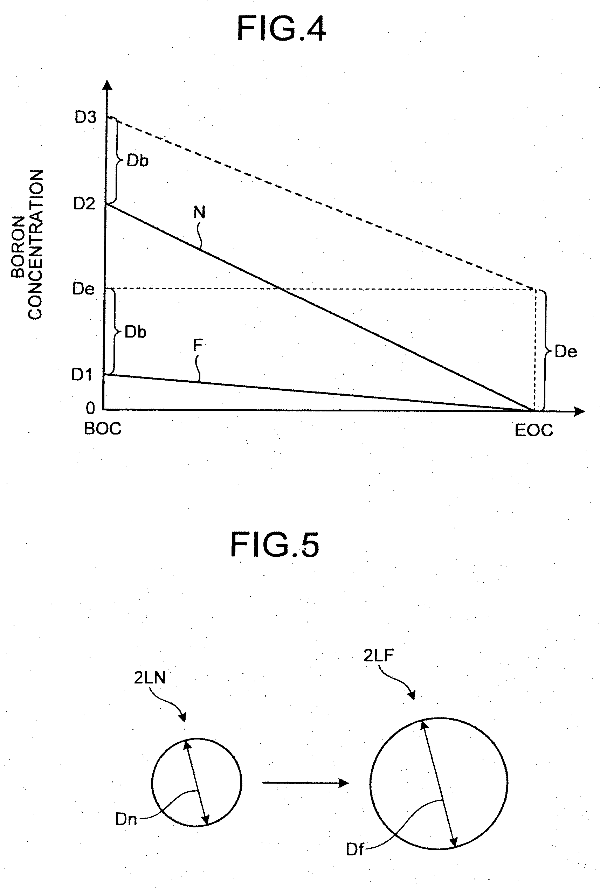

FIG. 4 is a schematic diagram of a variation in a boron concentration in the primary coolant at the time of a rated output operation from a BOC (Beginning Of Cycle: at the time of start of an operation of the reactor) to an EOC (End Of Cycle: at the time of completion of an operation) of a reactor that performs a chemical shim control. The reference sign N in FIG. 4 represents a variation in the boron concentration in the primary coolant in the reactor that performs the chemical shim control without adding any burnable poison to the fuel. The reference sign F in FIG. 4 represents a variation in the boron concentration in the primary coolant in the reactor (when burnable poison is added to the fuel in large quantity) according to the present embodiment.

In a reactor other than the reactor of the present embodiment, the boron concentration (the concentration of a neutron absorber) in a primary coolant at the BOC is D2 (for example, 1700 ppm). The boron concentration in the primary coolant at the time of the rated output operation at the EOC is substantially 0 ppm, both in the reactor performing the chemical shim control without adding any burnable poison and in the reactor according to the present embodiment. There exists a boron concentration in the primary coolant required for realizing cold shutdown by the chemical shim control and for maintaining a state of the cold shutdown, and such a boron concentration is Db (for example, 700 ppm) at the BOC and De (for example, 1000 ppm) at the EOC (Db<De). As an operating time of the reactor is elapsed, FP or plutonium having a high neutron absorbing capability is produced by combustion of the fuel, a moderator temperature coefficient is increased toward a negative side, and the boron concentration in the primary coolant required for maintaining the cold shutdown at the EOC becomes higher than that at the BOC.

To maintain the cold shutdown, because the boron concentration De in the primary coolant is required at the EOC, a capability of processing the primary coolant whose boron concentration in the primary coolant is De is required for the reactor. In the present embodiment, when burnable poison is added to the fuel, a sum of a boron concentration D1 in the primary coolant at the time of the rated output operation at the BOC and a boron concentration Db in the primary coolant at the BOC required for realizing the cold shutdown by the chemical shim control becomes equal to or lower than the boron concentration De in the primary coolant at the EOC required for maintaining the cold shutdown by the chemical shim control. That is, D1 is equal to or lower than De-Db.

In this manner, it is possible to effectively utilize the processing capability of the primary coolant including boron required for a reactor. The boron concentration D1 in the primary coolant at the time of the rated output operation at the BOC can be zero. However, there is an adverse possibility that the amount of burnable poison added to the fuel is increased, and it becomes difficult to design the reactor core that can obtain appropriate output distribution. Therefore, it is preferable that the boron concentration D1 in the primary coolant at the time of the rated output operation at the BOC has a certain value.

In practice, it is necessary that the boron concentration D1 in the primary coolant at the time of the rated output operation at the BOC has a margin of a certain level in view of design precision of a reactor and specifications of a reactor core of the reactor. Therefore, the boron concentration in the primary coolant D1 at the time of the rated output operation at the BOC is preferably calculated by adding a predetermined value, namely, a predetermined margin Dm which is set in view of the design precision of the reactor and the specifications of the reactor core of the reactor to De-Db. With this configuration, the reactor can be operated more safely. For example, a margin of a boron concentration based on the design precision of the reactor is set to 100 ppm, a margin of a boron concentration based on variety of the specifications of the reactor core of the reactor is set to 200 ppm, De is set to 1000 ppm, and Db is set to 700 ppm. In this case, D1 becomes 600 ppm.

As described above, according to the reactor of the present embodiment, the concentration D1 of boron included in the primary coolant at the time of the rated output operation of the reactor at the time of start of an operation of the reactor (BOC) is equal to or less than a value (D1=De-Db+Dm) obtained by adding a predetermined value Dm to the value (De-Db),where De is the boron concentration required for maintaining the reactor in the cold shutdown sate at the time of completion of an operation of the reactor (EOC), Db is the boron concentration required for maintaining the reactor in the cold shutdown sate at the time of start of an operation (BOC) of the reactor, and Dm is the predetermined margin Dm set in view of the design precision of the reactor and the specifications of the reactor core of the reactor. In the present embodiment, an amount of burnable poison to be added to fuel is determined such that it is possible to realize the boron concentration D1 included in the primary coolant at the time of the rated output operation of the reactor at the time of start of an operation of the reactor (BOC). A specific amount of burnable poison to be charged cannot be uniquely determined because operating conditions of a reload core are variously varied. Therefore, the amount of burnable poison is determined such that the boron concentration becomes equal to or lower than a predetermined value in the examination of design of the reload core that is carried out when fuel is replaced.

### [Reduction of chemical shim control when reactor shuts down]

Conventionally, a control rod is used when hot shutdown of the reactor is performed, and the chemical shim control is used when cold shutdown of the reactor is performed. The chemical shim control is used when the shutdown state of the reactor is maintained. In the present embodiment, the control rod is used when the hot shutdown and the cold shutdown of the reactor are performed, and the chemical shim control is used only when the shutdown state of the reactor is maintained. With this configuration, because the chemical shim control that is conventionally used when the reactor performs cold shutdown becomes unnecessary, it is possible to largely reduce the chemical shim control concentration in the primary coolant as shown with F1 in FIG. 2 when the reactivity of the reactor is controlled. Because a reactivity control capability of a degree such that the reactor can be immediately cold shut down only by the control rod is given to the control rod, there is also an effect that it is possible to avoid recriticality at the time of an excessively cooled state of the reactor. Further, because the chemical shim control is not used to realize the cold shutdown, a safety system can be established autonomously (countermeasures against an excessively cooled state are strengthened).

The hot shutdown means a shutdown state where the reactor is maintained in its subcriticality state and the temperature of the primary coolant is 100°C or higher. In some cases, the hot shutdown also means a state where the temperature of the primary coolant is maintained at a no-load temperature of about 290°C by heat input of a primary coolant pump in some cases. The cold shutdown means a state where nuclear fission reactions of a reactor are shutdown, and the reactor is cooled and decompressed at a temperature of 95°C or lower. The reactivity control capability of the control rod means the degree of capability to adjust the reactivity of the reactor, and when the inserting amount or the pulling amount of the control rod is the same, the reactivity control capability that is capable of adjusting the reactivity more largely is expressed that the reactivity control capability is high. To enhance the reactivity control capability, a material having a high neutron absorbing capability is used as the control rod, or the number of control rods is increased.

FIGS. 5 to 7 represent examples of enhancing the reactivity control capability of the control rod. FIGS. 5 to 7 represent cross sections of the control rod intersecting with a longitudinal direction of the control rod. When control rods are used for hot shutdown of a reactor and for cold shutdown of the reactor to reduce the chemical shim control concentration in the primary coolant when the reactor is shut down, the control rods are provided with reactivity control abilities that is capable of shutting down the reactor that is being operated without putting any neutron absorber (for example, boron) into the primary coolant. To realize this, the number of control rods used in a conventional PWR is increased or specifications or a shape of the control rod are devised.

when the number of control rods is increased, a layout of the control rod that does not cause a structural problem of the reactor is employed. In this case, it is preferable that the number of control rods is half or less than the number of fuel assembly in terms of suppression of increase in size of the reactor. Examples of devices of the specifications and the shape of the control rod include employment of full-length B₄C control rod (a structure in which B₄C is arranged as a neutron absorber over the entire region of the fuel rod in its longitudinal direction), increase in diameter of the control rod, increase in a surface area of the control rod, and addition of a neutron moderating material to the control rod. As the increase in diameter of the control rod, a diameter Df is set greater than a diameter Dn of a control rod 2LN used in a conventional PWR like a control rod 2LF shown in FIG. 5 (Df>Dn). The diameter of the control rod 2LF is set to the maximum diameter within a range not interfering with the control rod 2LF while taking a distance between the arranged control rods 2LF into account.

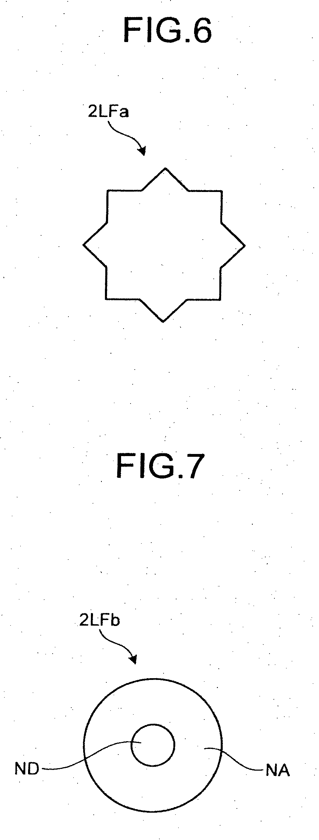

As the increase in the surface area of the control rod, a circular cross section of the control rod is changed into a polygonal cross section like a control rod 2LFa shown in FIG. 6. With this configuration, the surface area of the control rod 2LFa can be increased as compared with a control rod having the circular cross section. As an example to add a neutron moderating material to the control rod, like a control rod 2LFb shown in FIG. 7, a neutron moderating material ND (for example, carbon or light water) is arranged inside of a neutron absorber NA (for example, B₄C) . With this configuration, fast neutron that passes through the neutron absorber NA is moderated by the neutron moderating material ND and the fast neutron becomes thermal neutron, and is absorbed by the neutron absorber NA. Accordingly, the reactivity control capability of the control rod 2LFb is enhanced.

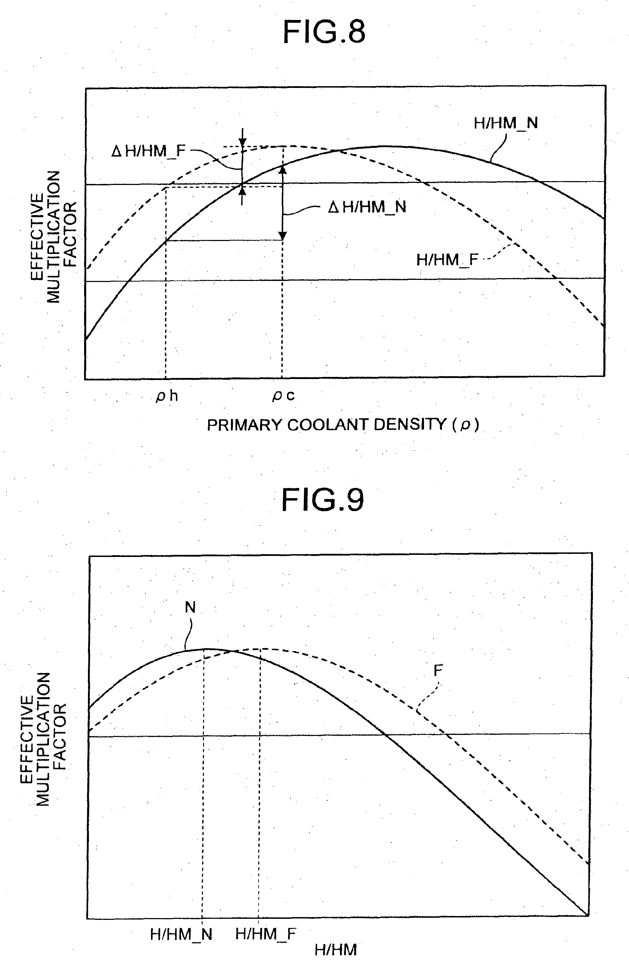

FIG. 8 depicts a relation between an effective multiplication factor and a primary coolant density. As described above, in the present embodiment, the chemical shim control concentration in the primary coolant is reduced when the reactor is shut down. Therefore, the atomic number ratio H/HM of hydrogen to heavy metal can be increased as compared with the conventional technique. A solid line in FIG. 8 depicts a relation between a primary coolant density ρ (g/cm³) and an effective multiplication factor in a current atomic number ratio H/HM_N of hydrogen to heavy metal. And a dotted line represents a relation between the primary coolant density ρ (g/cm³) and an effective multiplication factor in an atomic number ratio H/HM_F of hydrogen to heavy metal that is increased greater than the current value by reducing the chemical shim control concentration in the primary coolant.

When the reactor is cooled, the temperature of a primary coolant (light water) is lowered, and the primary coolant density increases from ρh (the primary coolant density at the time of the rated output operation) to pc (the primary coolant density at the time of cold shutdown). With this configuration, the effective multiplication factor is also increased. Therefore, when the reactor is cooled, it is necessary to control an addition reactivity that corresponds to the increased effective multiplication factor. Therefore, as shown in FIG. 8, when the atomic number ratio H/HM of hydrogen to heavy metal is increased, a variation in the effective multiplication factor at the time of a cooling operation is reduced as compared with that when the atomic number ratio H/HM of hydrogen to heavy metal is small. For example, as shown in FIG. 8, when the primary coolant density is increased from ph to pc, a variation in the effective multiplication factor at the time of the cooling operation becomes ΔH/HM_F from ΔH/HM_N (ΔH/HM_N>ΔH/HM_F).

The variation in the effective multiplication factor when the reactor is cooled corresponds to the addition reactivity when the reactor is cooled. Therefore, when the atomic number ratio H/HM of hydrogen to heavy metal is increased, the addition reactivity can be reduced. With this configuration, when the chemical shim control is used while the reactor is cooled, the amount of boron added while the reactor is cooled can be reduced by a reduced amount of the addition reactivity. Therefore, the chemical shim control concentration in the primary coolant can be reduced.

Further, because it is possible to reduce the addition reactivity when the reactor is cooled by increasing the atomic number ratio H/HM of hydrogen to heavy metal, it is not required to increase the reactivity control capability of the control rod more than necessary. With this configuration, as shown in F2 in FIG. 2, the reactivity control capability of the control rod can be lowered at the time of the cold shutdown. Therefore, it becomes easy to realize the cold shutdown of the reactor only by the control rods, and it becomes possible to reduce the number of control rods. Further, the moderating environment of neutrons can be improved by increasing the atomic number ratio H/HM of hydrogen to heavy metal. Therefore, it is possible to reduce the degree of initial enrichment of uranium of fuel, and also to reduce the degree of enrichment of residual uranium after combustion. Accordingly, it is possible to enhance fuel economy and to effectively utilize the resource.

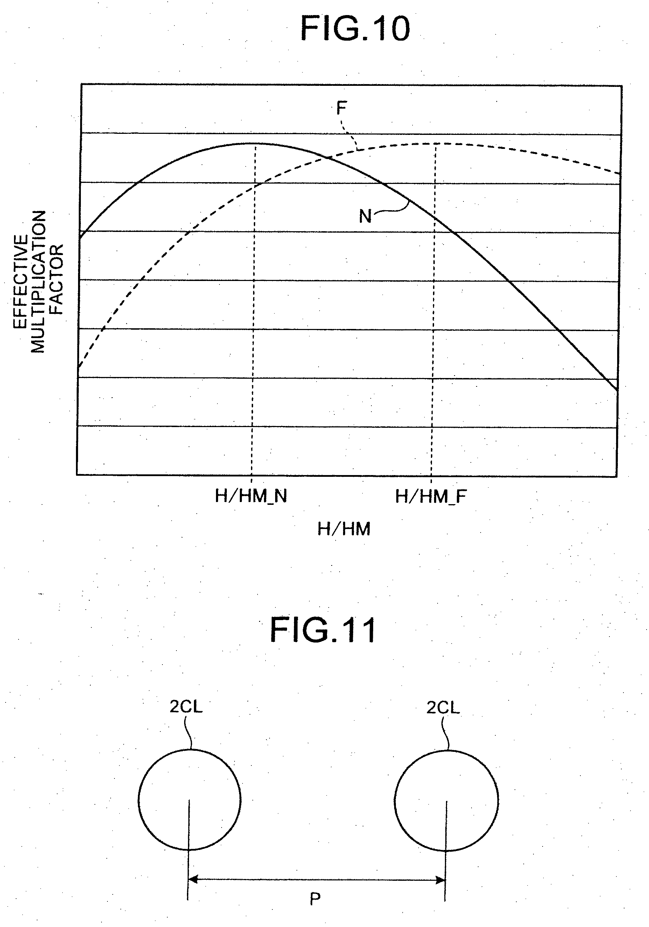

FIGS. 9 and 10 depict a relation between an effective multiplication factor and an atomic number ratio H/HM of hydrogen to heavy metal. FIG. 11 depicts an arrangement pitch of fuel rods. A dotted line F in FIG. 9 represents that an addition amount of burnable poison with respect to fuel is greater than that shown with a solid line N. A dotted line F in FIG. 10 represents that the chemical shim control concentration in the primary coolant is reduced as compared with a case shown with the solid line N. The maximum value of the atomic number ratio H/HM of hydrogen to heavy metal during the operation of the reactor is a value when the effective multiplication factor becomes the maximum value (the effective multiplication factor becomes convex upward). The atomic number ratio H/HM of hydrogen to heavy metal is set within a range from a curve that represents a relation between the effective multiplication factor and the atomic number ratio H/HM of hydrogen to heavy metal at the time of the hot shutdown at the BOC to a value at which the effective multiplication factor becomes maximum.

In an example shown in FIG. 9, when the adding amount of the burnable poison is increased, the value of the atomic number ratio of hydrogen to heavy metal at the time the effective multiplication factor becomes the maximum is increased (from H/HM_N to H/HM_F) . Further, in an example shown in FIG. 10, when the chemical shim control concentration in the primary coolant is reduced, the value of the atomic number ratio H/HM of hydrogen to heavy metal at the time the effective multiplication factor becomes the maximum is increased (from H/HM_N to H/HM_F). In this manner, by adding an amount of burnable poison and reducing the chemical shim control concentration in the primary coolant, it is possible to increase the value of the atomic number ratio of hydrogen to heavy metal at the time the effective multiplication factor becomes the maximum. Therefore, the atomic number ratio H/HM of hydrogen to heavy metal can be increased by increasing the adding amount of burnable poison and by reducing the chemical shim control concentration in the primary coolant.

With this configuration, the present embodiment becomes advantageous for optimizing the design of fuel assembly, and as described above, it is possible to reduce the addition reactivity required for bringing the reactor from the hot shutdown state to the cold shutdown state. It is preferable that the atomic number ratio H/HM of hydrogen to heavy metal is 4.5 or higher, more preferably 5 or higher, and still more preferably 5.5 or higher. Further, the maximum value of the atomic number ratio H/HM of hydrogen to heavy metal is a value when the nuclear reactivity of the reactor core becomes the maximum, that is, when the effective multiplication factor becomes the maximum in a state where the boron concentration in the primary coolant is zero and all of the control rods are pulled out.

There are various techniques of increasing the atomic number ratio H/HM of hydrogen to heavy metal. For example, it is possible to increase the atomic number ratio H/HM of hydrogen to heavy metal by reducing the diameters of fuel rods or by increasing the arrangement pitch of fuel rods. The arrangement pitch of fuel rods is a distance P between centers of the adjacent fuel rods 2CL shown in FIG. 11. In the present embodiment, the arrangement pitch is 1.3 centimeters or more and 1.5 centimeters or less, and more preferably 1.4 centimeters or more and 1.5 centimeters or less. According to this technique, it is possible to increase the atomic number ratio H/HM of hydrogen to heavy metal without being imposed any constraints such as the producing capability of the fuel rods. By these techniques, the atomic number ratio H/HM of hydrogen to heavy metal is increased, and the fuel assembly is designed within a range where a moderator density coefficient does not become a positive value at the BOC and HZP (Hot Zero Power). With this configuration, it is possible to reduce the number of control rods required for realizing cold shutdown, and to simplify the facilities.

### Industrial Applicability

The reactor according to the present invention is useful for reducing environmental loads, and it is particularly suitable for PWRs.

### Reference Signs List

- 1: nuclear power plant
- 1W: containment vessel
- 2: reactor
- 2A: control-rod driving apparatus
- 2C: fuel portion
- 2CL, 2CLa, 2Lb1: fuel rod
- 2L, 2LF, 2LFa, 2LFb, 2LN: control rod
- 2P: pressure vessel
- 3: steam generator
- 4: pressurizer
- 5: primary coolant pump
- 8: turbine
- 9: steam condenser
- 10: power generator
- 14: volume control tank
- 15: charging pump
- 16: demineralizer
- 20: boron injecting apparatus
- 21: boric acid tank
- 22: boric-acid injecting pump
- 23: flow-volume adjusting valve
- 24: boric-acid supplying path
- 25: boric-acid injecting path
- 26: open/close valve
- 28: flowmeter

## Claims

1. A nuclear reactor (2) comprising :
a pressure vessel (2P) filled with a primary coolant,
a fuel rod (2CL, 2CLb1) into which nuclear fuel is enclosed, the fuel rod (2CL, 2CLb1) being provided in the pressure vessel, and
a control rod (2L) that controls nuclear reactions of the nuclear fuel, **characterized in that**
the fuel contains burnable poison and a concentration of the burnable poison at a central portion of the fuel rod (2CLb1) is higher than a concentration of the burnable poison at least at one of ends in the longitudinal direction of the fuel rod (2CLb1),
the control rod (2L) has a reactivity control capability such that the nuclear reactor (2) in operation can be achieved cold shutdown without putting a neutron absorber into the primary coolant, and
a concentration (D1) of a neutron absorber in the primary coolant (C1) at a full power operation of the nuclear reactor (2), when an operation of the nuclear reactor (2) is started (BOC), is set equal to or lower than a value that is obtained by adding a predetermined value to a value obtained by subtracting a concentration (De) of the neutron absorber that is required for maintaining a cold shutdown state of the nuclear reactor (2) when an operation of the nuclear reactor is started (BOC) from a concentration (De) of the neutron absorber that is required for maintaining the cold shutdown state of the nuclear reactor (2) when an operation of the nuclear reactor (2) is completed (EOC), the predetermined value being set in view of a design precision of the reactor (2) and specifications of a reactor core of the reactor (2).

2. The nuclear reactor according to claim 1, wherein the primary coolant is water, and an atomic number ratio of hydrogen to heavy metal of the nuclear reactor (2) is 4.5 or more, and is equal to or less than a value when the effective multiplication factor becomes the maximum in a state where the boron concentration is the primary coolant is zero and all of the control rods are pulled out.

## Patentansprüche

1. Kernreaktor (2), umfassend:
einen Druckbehälter (2P), der mit einem Primärkühlmittel gefüllt ist,
einen Brennstab (2CL, 2CLb1), in dem Kernbrennstoff eingeschlossen ist, wobei der Brennstoff im Druckbehälter bereitgestellt ist, und
einen Steuerstab (2L), der Kernreaktionen des Kernbrennstoffes steuert,
**dadurch gekennzeichnet, dass**
der Brennstoff brennbares Gift enthält und eine Konzentration des brennbaren Giftes in einem mittleren Abschnitt des Brennstabes (2CLb1) höher ist als eine Konzentration des brennbaren Giftes an mindestens einem der Enden in Längsrichtung des Brennstabes (2CLb1),
der Steuerstab (2L) eine Reaktivitäts-Steuerfähigkeit derart aufweist, dass der Kernreaktor (2) im Betrieb eine Kaltabschaltung ausführen kann, ohne einen Neutronenabsorber in das Primärkühlmittel zu geben, und
eine Konzentration (D1) eines Neutronenabsorbers im Primärkühlmittel (C1) im Betrieb des Kernreaktors (2) mit voller Leistung, wenn ein Betrieb des Kernreaktors (2) aufgenommen wird (BOC), kleiner oder gleich einem Wert gesetzt ist, der erhalten wird, indem ein vorher festgelegter Wert zu einem Wert addiert wird, der durch das Subtrahieren einer Konzentration (De) des Neutronenabsorbers erhalten wird, die für ein Aufrechterhalten des Zustandes der Kaltabschaltung des Kernreaktors (2) erforderlich ist, wenn ein Betrieb des Kernreaktors bei einer Konzentration (De) des Neutronenabsorbers aufgenommen (BOC) wird, die erforderlich ist, um den Zustand der Kaltabschaltung des Kernreaktors (2) aufrechtzuerhalten, wenn ein Betrieb des Kernreaktors (2) abgeschlossen (EOC) ist, wobei ein vorher bestimmter Wert im Hinblick auf eine Konstruktionspräzision des Reaktors (2) und Spezifikationen eines Reaktorkerns des Reaktors (2) festgesetzt ist.

2. Kernreaktor nach Anspruch 1, wobei das Primärkühlmittel Wasser ist und ein Atomzahlverhältnis von Wasserstoff zu Schwermetall des Kernreaktors (2) 4,5 oder mehr ist, und kleiner oder gleich einem Wert ist, wenn der effektive Multiplikationsfaktor in einem Zustand am größten wird, in dem die Borkonzentration das Primärkühlmittel ist, diese null ist und alle Kontrollstäbe herausgezogen sind.

## Revendications

1. Réacteur nucléaire (2) comportant :
une cuve de pression (2P) remplie d'un caloporteur primaire,
une barre de combustible (2CL, 2CLb1) dans laquelle du combustible nucléaire est enfermé, la barre de combustible (2CL, 2CLb1) étant prévue dans la cuve de pression, et
une barre de contrôle (2L) qui contrôle des réactions nucléaires du combustible nucléaire, **caractérisé en ce que**
le combustible contient du poison consommable et une concentration du poison consommable au niveau d'une partie centrale de la barre de combustible (2CLb1) est plus élevée qu'une concentration du poison consommable au moins au niveau d'une des extrémités dans la direction longitudinale de la barre de combustible (2CLb1),
la barre de contrôle (2L) a une capacité de contrôle de réactivité telle que le réacteur nucléaire (2) en fonctionnement peut réaliser un arrêt à froid sans mettre d'absorbeur de neutrons dans le caloporteur primaire, et
une concentration (D1) d'absorbeur de neutrons dans le caloporteur primaire pour un fonctionnement à pleine puissance du réacteur nucléaire (2), quand un fonctionnement du réacteur nucléaire (2) est démarré (BOC), est établie égale ou inférieure à une valeur qui est obtenue en ajoutant une valeur prédéterminée à une valeur obtenue en soustrayant une concentration (De) d'absorbeur de neutrons qui est exigée pour maintenir un état d'arrêt à froid du réacteur nucléaire (2) quand un fonctionnement du réacteur nucléaire est démarré (BOC) d'une concentration (De) d'absorbeur de neutrons qui est exigée pour maintenir l'état d'arrêt à froid du réacteur nucléaire (2) quand un fonctionnement du réacteur nucléaire (2) est terminé (EOC), la valeur prédéterminée étant établie en vue d'une précision de conception du réacteur (2) et de spécifications d'un coeur de réacteur du réacteur (2).

2. Réacteur nucléaire selon la revendication 1, dans lequel le caloporteur primaire est de l'eau, et un rapport de nombre atomique d'hydrogène sur métal lourd du réacteur nucléaire (2) est de 4,5 ou plus, et est égal ou inférieur à une valeur quand le facteur de multiplication effectif devient le maximum dans un état où la concentration en bore dans le caloporteur primaire est de zéro et toutes les barres de contrôle sont retirées.
